# EUROPEAN PATENT APPLICATION

(11) **EP 4 611 283 A1**
(43) Date of publication of application: **03.09.2025**
(21) Application number: 25161105.9
(22) Date of filing: 28.02.2025
(51) Int. Cl.: H04B 10/556, H04B 10/61

(54) **METHODS AND APPARATUSES FOR DUAL-POLARIZATION QUADRATURE AMPLITUDE MODULATION TRANSMISSION AND COHERENT RECEPTION**

(30) Priority: 01.03.2024 US 202418593750
(71) Applicant: Nokia Solutions and Networks Oy, 02610 Espoo (FI)
(72) Inventor: Harstead, Edward Eric, Jay, 12941 (US); Bonk, Rene, 75181 Pforzheim (DE); Lefevre, Yannick, 3001 Heverlee (BE)
(74) Representative: IP HILLS NV

(57) **Abstract**

Dual-polarization, quadrature amplitude modulation optical transmitter configured to receive a plurality of different data streams and a modulation control signal, to select one or two of the plurality of received data streams based on the modulation control signal, and to convey a same data stream to, at least, two selected optical modulators. Corresponding coherent DP-QAM optical receiver comprising demappers and combiners and being configured to receive a modulation control signal.

## Description

### TECHNICAL FIELD

This disclosure relates to the field of dual-polarization (DP), quadrature amplitude modulation (QAM) transmitters and coherent DP-QAM receivers for optical networks.

### INTRODUCTION

This section introduces aspects that may help facilitate a better understanding of the instant disclosure. Accordingly, the statements of this section are to be read in this light and are not to be understood as admissions about what is, or what is not, prior art.

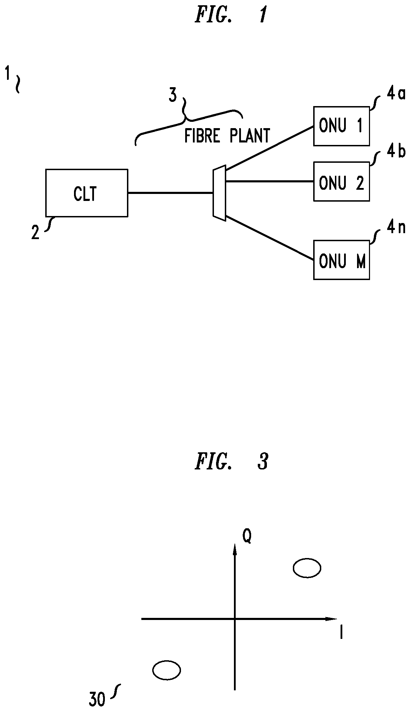

Figure 1 illustrates a simplified diagram of a passive optical network (PON) 1 that typically includes an optical line terminal (OLT) 2 at a service provider's network location and a plurality of optical network units (ONUs) 4a to 4m (where "m" represents a last ONU) near or at end-user locations. The ONUs are connected to the OLT by way of an optical distribution network (ODN) 3. Many existing PONs incorporate time-division multiplexing (TDM) PON technologies, in which the optical fiber medium within ODN 3 is shared in time between different ONUs. Also time- and wavelength-division multiplexing (TWDM) PON technologies exist in which multiple TDM systems at different wavelengths are "stacked" (i.e., used) within the same PON system.

Existing, deployed PON systems, such as PON 1, apply a constant bit rate (line rate) in the *downstream* and *upstream* directions (e.g., from OLT 2 to each ONU 4a to 4m and vice versa) using non-return-to-zero on-off keying (NRZ-OOK) intensity modulation and direct detection (IM-DD). This constant physical (PHY) layer rate and fixed modulation is used irrespectively of the loss margin of a system. Said another way, typically many PON systems maintain a consistent downstream and upstream data rate regardless of the potential signal losses or impairments that may occur during transmission of the data. Such signal losses and impairments tend to decrease the actual margin or reach (e.g., in kilometers, miles) of data being transmitted via the ODN.

Typical coherent systems may use DP-QAM modulation. QAM refers to in-phase and quadrature (I-Q) modulation, which can be done at various QAM levels (e.g., 4QAM, 16QAM) where 4QAM is also commonly referred to as quadrature phase shift keying (QPSK) and is typically the lowest order of QAM modulation.

Further, some known IM-DD and coherent point-to-point (PtP) systems may use higher-order (higher than NRZ-OOK and QPSK) modulation schemes to achieve throughput increases.

Accordingly, it is desirable to provide methods and related systems that allow for throughput increases as well as extending the loss margin of an ODN (i.e., transmitting over networks with higher attenuation or extending its reach) using lower-order modulation schemes, that is, lower than NRZ-OOK for IM-DD systems and lower than QPSK for coherent systems.

### SUMMARY

This disclosure provides a number of methods and related apparatuses (e.g., transmitters, receivers) that increase the throughput as well as extend the loss margin of an optical data network.

For example, one exemplary dual-polarized (DP) quadrature amplitude modulation (QAM) optical transmitter comprises a control unit configured to, receive a plurality of different data streams and a modulation control signal, select one or two of the plurality of received data streams to be output based on the modulation control signal, select at least two optical modulators to receive a same data stream from among the one or two selected data streams, output the same data stream to the selected optical modulators, wherein the at least two modulators are configured to generate respective optical signals modulated with the same data stream in accordance with the modulation control signal.

In such an embodiment the control unit may be further configured to select a first and second data stream from the plurality of received data streams to be output based on the modulation control signal, select a first set of optical modulators to receive a same data stream comprising the first selected data stream based on the modulation control signal, select a second set of optical modulators to receive a same data stream comprising the second selected data stream based on the modulation control signal, output the same first data stream to the first set of optical modulators, and output the same second data stream to the second set of optical modulators; the first set of optical modulators comprising a first in-phase modulator and a first quadrature modulator associated with a first polarization for generating respective optical signals modulated with the same first data stream; and the second set of optical modulators comprising a second in-phase modulator and a second quadrature modulator associated with a second polarization for generating respective optical signals modulated with the same second data stream.

Further, the control unit may be further configured to select a first and second data stream from the plurality of received data streams to be output based on the modulation control signal, select a first set of optical modulators to receive a same data stream comprising the first selected data stream based on the modulation control signal, select a second set of optical modulators to receive a same data stream comprising the second selected data stream based on the modulation control signal, output the same first data stream to the first set of optical modulators, and output the same second data stream to the second set of optical modulators; the first set of optical modulators comprising a first modulator associated with a first polarization and a second modulator associated with a second polarization for generating respective optical signals modulated with the same first data stream; and the second set of optical modulators comprising a third modulator associated with the first polarization and a fourth modulator associated with the second polarization for generating respective optical signals modulated with the same second data stream.

Still further, the control unit may be further configured to select a first data stream from the plurality of received data streams to be output based on the modulation control signal, select a first set and second set of optical modulators to receive a same data stream comprising the first selected data stream based on the modulation control signal, output the same first data stream to the first and second set of optical modulators; the first set of optical modulators comprising a first in-phase modulator and a first quadrature modulator associated with a first polarization for generating respective optical signals modulated with the same first data stream; and the second set of optical modulators comprising a second in-phase modulator and a second quadrature modulator associated with a second polarization for generating respective optical signals modulated with the same first data stream.

Continuing, the control unit may yet be further configured to select a first data stream from the plurality of received data streams to be output based on the modulation control signal, select at least two optical modulators to receive a same data stream comprising the first data stream, output the first data stream to the selected optical modulators selected to receive the first data stream; and wherein the selected optical modulators selected to receive the first data stream comprise at least one in-phase modulator and at least one quadrature modulator associated with the same polarization for generating respective optical signals modulated with the same first data stream.

According to an example embodiment, the DP-QAM optical transmitter may be part of an optical network unit (ONU) of a passive optical network, or a part of an optical line terminal (OLT) of the passive optical network (PON).

According to an example embodiment, the DP-QAM optical transmitter may be a part of an OLT of a PON where the OLT controls the modulation control signal.

According to an example embodiment, the modulation control signal may be controlled by an OLT of a PON.

In addition to exemplary, inventive transmitters, the disclosure provides a number of exemplary, inventive receivers. For example, the disclosure provides a coherent DP-QAM optical receiver comprising: a demapping and combiner element configured to receive a modulation control signal and two or more samples, the element comprising, one or more combiners, and one or more demappers, wherein the element is further configured to determine one or more bit indications based on the modulation control signal.

In embodiments the one or more demappers may be configured to receive the two or more samples and determine one or more respective intermediate bit indications and the one or more combiners may be configured to receive the one or more respective intermediate bit indications and the modulation control signal and combine the one or more respective intermediate bit indications based on the modulation control signal to determine the one or more bit indications.

In another embodiment, the one or more combiners may be configured to receive the two or more samples and to combine the two or more samples to determine one or more combined values based on the modulation control signal, and the one or more demappers may be configured to receive the one or more combined values and determine the one or more bit indications based on the modulation control signal.

In yet another embodiment an exemplary inventive coherent DP-QAM optical receiver may comprise: a demapping and combining element configured to determine one or more bit indications, the element comprising one or more combiners configured to receive a plurality of intermediate bit indications and a modulation control signal, select one or more sets of the intermediate bit indications from the plurality of intermediate bit indications based on the modulation control signal; and combine the one or more sets of intermediate bit indications based on the modulation control signal to form the one or more bit indications.

In such an exemplary receiver a first combiner of the one or more combiners may be configured to select first and second intermediate bit indications from the plurality of intermediate bit indications associated with the same, first polarization and combine the selected first and second intermediate bit indications based on the modulation control signal; and a second combiner of the one or more combiners may be configured to select third and fourth intermediate bit indications from the plurality of intermediate bit indications associated with the same, second polarization and combine the selected third and fourth intermediate bit indications based on the modulation control signal.

Alternatively, such an exemplary receiver may comprise a first combiner of the one or more combiners configured to select first and third intermediate bit indications from the plurality of intermediate bit indications wherein the first intermediate bit indication is associated with a first polarization and the third intermediate bit indication is associated with a second polarization, and combine the selected first and third bit intermediate bit indications based on the modulation control signal; and a second combiner of the one or more combiners configured to select second and fourth intermediate bit indications from the plurality of intermediate bit indications wherein the second intermediate bit indication is associated with the first polarization and the fourth intermediate bit indication is associated with the second polarization, and combine the second and fourth intermediate bit indications based on the modulation control signal.

In such an embodiment a combiner of the one or more combiners may be further configured to: receive the plurality of intermediate bit indications and a modulation control signal, select first, second, third and fourth intermediate bit indications from the plurality of intermediate bit indications based on the modulation control signal, wherein the first and second intermediate bit indication are associated with a first polarization, and the third and fourth intermediate bit indication are associated with a second polarization; and combine the first, second, third and fourth bit indications based on the modulation control signal.

According to an example embodiment, the inventive coherent DP-QAM optical receivers disclosed herein may be a part of an optical network unit (ONU) of a passive optical network (PON), wherein an optical line terminal (OLT) of the PON controls the modulation control signal.

In still another embodiment, a coherent, DP-QAM receiver may comprise: a demapping and combining element configured to receive a modulation control signal and select a first and second demapper; a first combiner configured to receive a first sample associated with an in-phase component of a first polarization and a second sample associated with a quadrature component of the first polarization and generate a first combined value; the first demapper configured to determine a first bit indication based on the first combined value associated with the first polarization; a second combiner configured to receive a first sample associated with an in-phase component of a second polarization and a second sample associated with a quadrature component of the second polarization and generate a second combined value; and the second demapper configured to determine a second bit indication based on the second combined value associated with the second polarization.

An additional exemplary, inventive coherent, DP-QAM receiver may comprise: a demapping and combining element configured to receive a modulation control signal and select a first and a second demapper and select a first and a second combiner; the first combiner configured to receive a first sample associated with a first polarization and a third sample associated with a second polarization and generate a first combined value, the second combiner configured to receive a second sample associated with the first polarization and a fourth sample associated with the second polarization and generate a second combined value; the first demapper configured to determine a first bit indication based on the first combined value; and the second demapper configured to determine a second bit indication based on the second combined value.

Yet another exemplary, inventive coherent, DP-QAM receiver may comprise: a demapping and combining element configured to receive a modulation control signal and select a demapper and one or more combiners; a first combiner of the one or more combiners configured to receive first samples associated with in-phase components of first and second polarizations and combine the first samples to form a first intermediate value; a second combiner of the one or more combiners configured to receive second samples associated with the quadrature component of the first and second polarizations and combine the second samples to form a second intermediate value; a third combiner of the one or more combiners configured to receive the first and second intermediate values and combine the intermediate values to form a combined value; and the demapper may be configured to receive the combined value and to determine a bit indication based on the combined value.

### BRIEF DESCRIPTION OF THE DRAWINGS

The present disclosure is illustrated by way of example and is not limited by the accompanying figures in which like reference numerals indicate similar elements and in which:
Figure 1 depicts an illustration of a simplified PON network including the ODN.
Figures 2A to 2D depict exemplary DP-QAM transmitters according to embodiments of the present disclosure.
Figure 3 depicts an exemplary constellation representing an optically aligned, DP modulated signal according to the disclosure.
Figure 4 depicts an exemplary coherent DP-QAM receiver according to the disclosure.
Figures 5A to 5C depict exemplary demapping and combining elements according to embodiments of the disclosure.
Figures 6A to 6C depict additional exemplary demapping and combining elements according to embodiments of the disclosure.

Specific embodiments of the present disclosure are disclosed below with reference to various figures and sketches. Both the description and the illustrations have been drafted with the intent to enhance understanding.

Simplicity and clarity in both illustration and description are sought to effectively enable a person skilled in the art to make, use, and best practice embodiments of the present disclosure in view of what is already known in the art. One skilled in the art will appreciate that various modifications and changes may be made to the specific embodiments described below without departing from the spirit and scope of the present disclosure. Thus, the specification and drawings are to be regarded as illustrative and exemplary rather than restrictive or all-encompassing, and all such modifications to the specific embodiments described below are intended to be included within the scope of the present disclosure.

### DETAILED DESCRIPTION OF EXEMPLARY EMBODIMENTS

The detailed description that follows describes exemplary embodiments and is not intended to be limited to the expressly disclosed combination(s). Therefore, unless otherwise noted, features disclosed herein may be combined together to form additional combinations that were not otherwise shown for purposes of brevity.

The disclosure provided herein describes features in terms of preferred and exemplary embodiments thereof. Numerous other embodiments, modifications and variations within the scope and spirit of the appended claims will occur to persons of ordinary skill in the art from a review of this disclosure.

As used herein and in the appended claims, the term "comprises," "comprising," or variations thereof are intended to refer to a non-exclusive inclusion, such that a process, method, article of manufacture, or apparatus (e.g., a transmitter, receiver) that comprises a list of elements includes those elements in the list and may include other elements not expressly listed or inherent to such process, method, article of manufacture, or apparatus.

The terms "a" or "an", as used herein, are defined as one, or more than one. The term "plurality", as used herein, is defined as two, or more than two. The term "another", as used herein, is defined as at least a second or more.

Unless otherwise indicated herein, the use of relational terms, if any, such as "first" and "second" and the like are used solely to distinguish one splitter, combiner, demapper, signal, data stream, bit indication, value, view, entity or action from another without necessarily requiring or implying any actual such relationship, order or importance between such splitters, combiners, demappers, signals, data streams, bit indications, values, views, entities or actions.

The terms "including" and/or "having", as used herein, are defined as comprising (i.e., open language).

The terms "exemplary" and/or "embodiment" mean one example of an inventive system or device (e.g., an OLT, ONU), process or component/step in a disclosed system, device or process.

Similar reference characters may denote similar features consistently throughout the attached drawings.

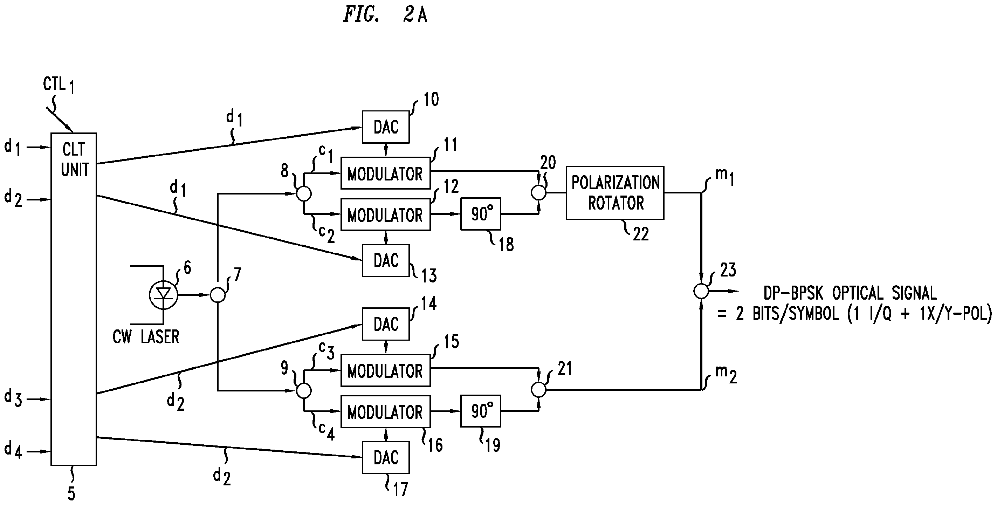

Referring now to Figure 2A there is depicted an exemplary DP-QAM transmitter *Tx* according to one embodiment of the present disclosure. The DP-QAM transmitter *Tx* may be incorporated into an exemplary, inventive OLT (or ONU) of a PON to name just one non-limiting example of an inventive apparatus. It should be noted, however, that the inventive transmitters and receivers describe herein are not limited to OLTs and ONUs of a PON. Rather, the inventive transmitters and receivers disclosed herein may be incorporated into coherent optical communication links that may utilize DP-QAM transmission, including PtP coherent systems.

As will be explained in more detail herein, the transmitter *Tx* may comprise an inventive and modified, DP, IQ-modulation configuration that applies the same data across the *I* and Q domains of a set of modulators. The inventors discovered the signal that is eventually output comprises a DP, Binary Phase Shift Keying (BPSK) modulated signal having the same total optical launch power as an existing transmitter that makes use of higher-order modulation schemes (QPSK). Further, the inventors discovered that as the transmitter's *Tx* launch power was kept constant, but the transmission bit rate was lowered, an increase in receiver sensitivity was obtained. In an embodiment, the DP output signal that results from providing identical data to respective I and Q domains (i.e., modulators) for each polarization provides an improvement (versus existing systems) in an ODN system's margin of approximately 3 dB and if the identical data is applied to respective I and Q domain of both polarizations an ODN system's margin can be improved up to 6 dB. Such an improvement in receiver sensitivity combined with digital signal processing in the receiver (described elsewhere herein) resulted in an increase in the system's signal to noise ratio (SNR) in comparison to the sensitivity of a baseline DP-QPSK receiver. This increase in SNR is associated with an improved bit error rate (BER) and thus results in power margins that can be leveraged to extend the system margin of an ODN.

Referring still to Figure 2A, the inventive, DP-QAM transmitter *Tx* may comprise a number of elements, such as a control unit 5 configured to receive a plurality of different data streams designated *d₁, d₂, d₃* and *d₄* and a control signal *ctl₁,* continuous wave optical light source 6 (e.g., laser diode), a source optical splitter 7, optical splitters 8, 9, digital-to-analog converters 10, 13,14 and 17, optical modulators 11, 12,15 and 16, optical phase shifters 18, 19 first and second optical combiners 20, 21, optical polarization rotator 22 and a third or primary optical combiner 23 for example. For the sake of clarity and brevity, only those elements related to the inventive methods will be described herein, the remaining elements having functions and features known to those skilled in the art. For the reader's benefit, it should be understood that the phase shifters 18, 19 and optical polarization rotator 22 may be positioned before their respective optical modulators 11,12 and 15,16. Further, it should also be understood that the input signals to the optical splitters 8, 9 may originate from two different light sources (e.g., optical light source 6 may comprise more than one light source).

In a first embodiment, the exemplary DP-QAM optical transmitter *Tx* may operate as follows.

The control unit 5 may be configured to receive the plurality of different data streams designated *d₁, d₂, d₃* and d*₄* and the modulation control signal *ctl₁* which may be generated automatically at a higher layer of the network if the system senses that more margin is needed, or by a network operator. It should be noted that in this embodiment (and others) data streams *d₃* and *d₄* may include "dummy" data (i.e., non-useful data).

Upon receiving the control signal *ctl₁* the control unit 5 may be configured to (i) select one or two of the plurality of received data streams *d₁, d₂, d₃* and *d₄* to be output based on the modulation control signal *ctl₁,* (ii) select at least two optical modulators from modulators 11,12, 15 and 16 to receive a same (or identical) data stream from among the one or two selected data streams, and (iii) output the same data stream to the selected optical modulators. Upon receiving the same data stream, the selected at least two modulators are configured to generate respective optical signals modulated with the same data stream in accordance with the modulation control signal.

Further, the control unit 5 may be further configured to (i) select a first and second data stream, for example, *d₁,* and *d₂,* from the plurality of received data streams *d₁, d₂, d₃* and *d₄* to be output based on the modulation control signal *ctl₁,* (ii) select a first set of optical modulators, for example modulators 11,12, to receive a same data stream comprising the first selected data stream *d₁,* based on the modulation control signal *ctl₁,* (iii) select a second set of optical modulators, for example 15, 16 to receive a same data stream comprising the second selected data stream d₂ based on the modulation control signal, and then output the same first data stream *d₁* to the first set of optical modulators 11,12 and output the same second data stream *d*₂ to the second set of optical modulators 15, 16.

In this embodiment the first set of optical modulators 11,12 may comprise a first in-phase modulator 11 and a first quadrature modulator 12 for generating respective optical signals by modulating respective optical carrier signals *c₁,c₂* with the same first data stream *d₁* and the second set of optical modulators 15, 16 may comprise a second in-phase modulator 15 and a second quadrature modulator 16 for generating respective optical signals by modulating respective optical carrier signals *c₃*,*c₄* with the same second data stream *d*₂.

As a result, the two signals *m₁, m₂* (corresponding to *d₁* and *d₂,* respectively) that are output from optical transmitter *Tx* may represent two orthogonal polarized BPSK signals (including appropriate phase shifting by phase shifters 18,19 and polarization rotation by rotator 22).

Though the example above applies identical data to both in-phase and quadrature modulators, in an alternative embodiment the data that is applied to a quadrature modulator (e.g., modulators 12, 16) may be the inverse of a data signal applied to in-phase modulator (e.g., modulators 11, 15). In such an embodiment, the signal that is output from the transmitter *Tx* may be represented by a constellation that is mirrored with respect to the in-phase axis, which is still a DP, BPSK modulated signal, with identical performance.

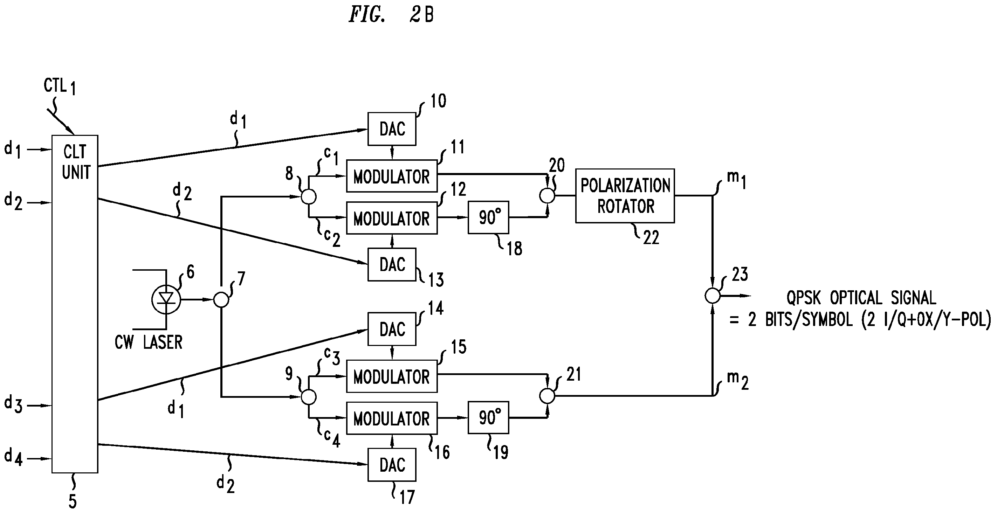

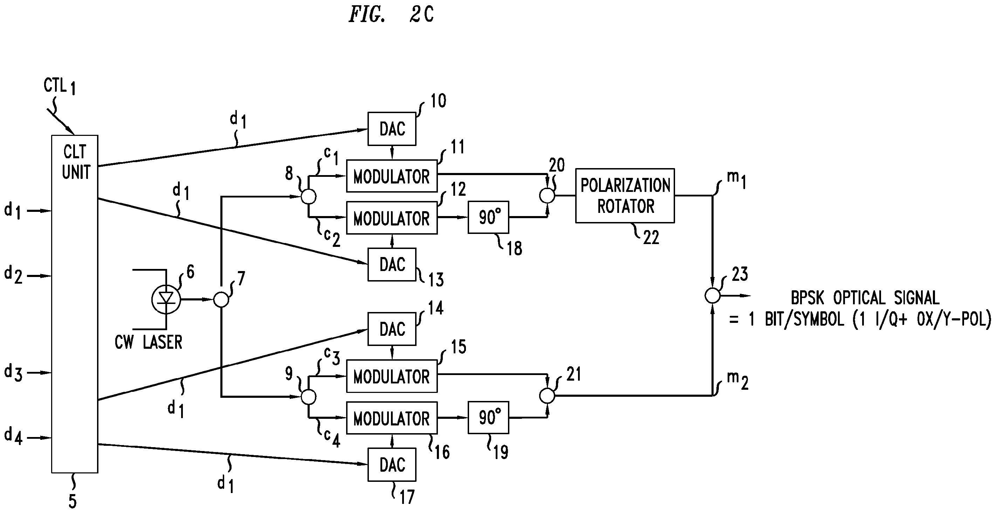

In an embodiment, an exemplary constellation 30 representing a combination of low-order modulated optical signals *m₁, m₂* is shown in Figure 3. The constellation 30 may comprise a constellation representing a BPSK modulated signal. As depicted in Figure 3, the inventor's discovered that the BPSK modulated signals *m₁, m₂* generated by transmitter *Tx* and represented by the constellation 30 has a larger distance between the nearest constellations points when compared to a known QPSK modulated signal. As will be explained, this leads to an increase in an inventive receiver's sensitivity of approximately 3dB (i.e., with respect to the transmitters illustrated in Figures 2A and 2B; up to 6 dB with respect to the transmitter illustrated by Figure 2C).

Referring now to Figure 2B there is depicted an inventive DP-QAM transmitter in accordance with a second embodiment of the disclosure. In this disclosure after the control unit 5 receives the plurality of different data streams designated *d₁, d₂, d₃, d₄* and the modulation control signal *ctl₁* the control unit 5 may be further configured to (i) select a first and second data stream, for example *d₁, d₂,* from the plurality of received data streams *d₁, d₂, d₃* and *d₄* to be output based on the modulation control signal *ctl₁* , (ii) select a first set of optical modulators 11,15 to receive a same data stream comprising the first selected data stream *d₁* based on the modulation control signal *ctl₁,* (iii) select a second set of optical modulators 12, 16 to receive a same data stream comprising the second selected data stream *d₂* based on the modulation control signal *ctl₁* and (iv) output the same first data stream *d₁* to the first set of optical modulators 11,15, and output the same second data stream *d₂,* to the second set of optical modulators 12, 16.

In this embodiment the first set of optical modulators may comprise a first modulator 11 associated with a first polarization and a second modulator 15 associated with a second polarization for generating respective optical signals by modulating respective optical carrier signals *c₁,c₃* with the same first data stream *d₁*; while the second set of optical modulators may comprise a third modulator 12 associated with the first polarization and a fourth modulator 16 associated with the second polarization for generating respective optical signals by modulating respective optical carrier signals *c₂*,*c₄* with the same second data stream *d₂.*

Once again, the two signals *m₁*, *m₂* that are output from optical transmitter *Tx* may represent two orthogonal polarized QPSK signals (including appropriate phase shifting by phase shifters 18,19 and polarization rotation by rotator 22). When they are combined by the third or primary combiner 23 they represent a DP-QPSK optical signal that includes the same information for both polarizations, thus resulting in a QPSK signal.

Referring now to Figure 2C there is depicted yet another inventive DP-QAM transmitter in accordance with a third embodiment of the disclosure. In this disclosure after the control unit 5 receives the plurality of different data streams designated *d₁, d₂, d₃, d₄* and the modulation control signal *ctl₁* the control unit 5 may be further configured to (i) select a first data stream, such as *d₁*, from the plurality of received data streams *d₁, d₂, d₃, d₄* to be output based on the modulation control signal *ctl₁*, (ii) select a first set 11,12 and second set 15,16 of optical modulators to receive a same data stream comprising the first selected data stream *d₁* based on the modulation control signal, and (ii) output the same first data stream *d₁* to the first and second set of optical modulators 11,12 and 15,16.

In this embodiment the first set of optical modulators 11,12 may comprise a first in-phase modulator 11 and a first quadrature modulator 12 for generating respective optical signals by modulating respective optical carrier signals *c₁,c₂* with the same first data stream while the second set of optical modulators 15,16 may comprise a second in-phase modulator 15 and a second quadrature modulator 16 for generating respective optical signals by modulating respective optical carrier signals *c₃*,*c₄* with the same second data stream.

As before, the two signals *m₁, m₂* that are output from optical transmitter *Tx* may represent two orthogonally polarized, but otherwise identical, BPSK signals (including appropriate phase shifting by phase shifters 18,19 and polarization rotation by rotator 22). In this embodiment, signals *m₁, m₂* contain the same data, but on different polarizations, thus, resulting in a BPSK signal

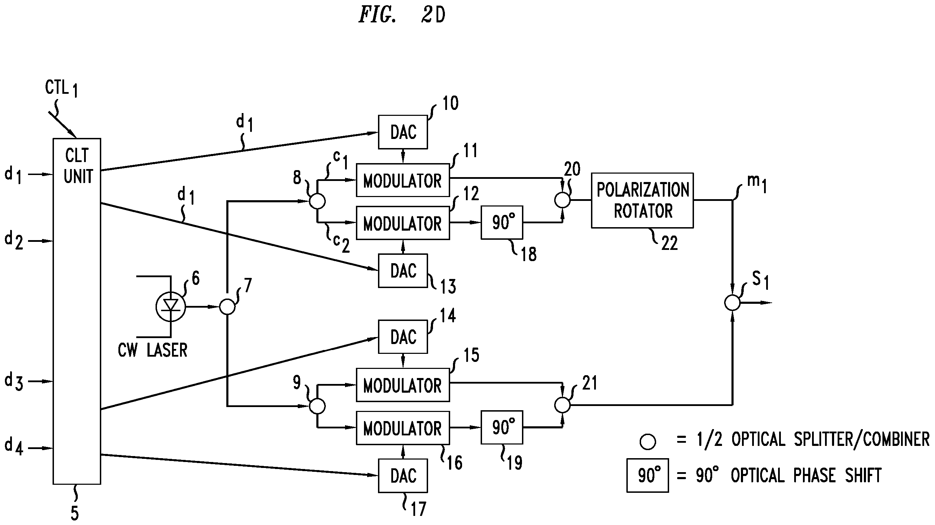

Referring now to Figure 2D there is depicted still another inventive DP-QAM transmitter in accordance with a fourth embodiment of the disclosure. In this embodiment, after the control unit 5 receives the plurality of different data streams designated *d₁, d₂, d₃, d₄* and the modulation control signal *ctl₁* the control unit 5 may be further configured to (i) select a first data stream, for example *d₁,* from the plurality of received data streams *d₁, d₂, d₃ ,d₄* to be output based on the modulation control signal *ctl₁,* (ii) select at least two optical modulators, for example modulators 11,12, to receive a same data stream comprising the first data stream *d₁* and (ii) output the first data stream *d₁* to the selected optical modulators 11,12 selected to receive the first data stream *d₁*.

In this embodiment the selected optical modulators 11,12 selected to receive the first data stream *d₁* may comprise at least one in-phase modulator 11 and at least one quadrature modulator 12 for generating respective optical signals by modulating respective optical carrier signals *c*_{*1*,}*c₂* with the same first data stream *d₁*.

It should be understood that in the above embodiments the first selected data stream need not always be data stream *d₁* and the second selected data stream need not always be data stream *d₂.* Rather, one of the received data streams *d₁,d₂, d₃,d₄* may be the first selected data stream or second selected data stream.

Each of the DP-QAM optical transmitters set forth in Figures 2A to 2D may be part of an OLT or may be part of an ONU of a PON.

As noted previously, the inventors have discovered that by applying the identical data across the *I* and Q domains of a set of modulators the signals that are eventually output from a transmitter comprise a lower-order modulated signal with a lower total data throughput having substantially the same power as an existing DP - QAM signal that uses a higher-order modulation scheme, leading to an increase in receiver sensitivity which may allow transmission over networks with higher attenuation and/or longer spans (i.e., lengths, distance).

As noted above, the transmitter *Tx* generates lower-order modulated signal(s). Accordingly, to correctly demodulate and decode such a signal the transmitter *Tx* must inform an inventive, coherent receiver that the transmitted signal has been modulated using a lower order scheme so that the receiver will correctly demodulate and decode the transmitted signal. More particularly, in one embodiment the transmitter *Tx* may be configured to transmit the modulation control signal *ctl₁* to a coherent receiver so that the coherent receiver can correctly demodulate the transmitted optical signal using a low-order demodulation scheme.

For example, the control signal *ctl₁* may be transmitted to a coherent receiver by the transmitter *Tx* via an in-band message sent in an Operations, Administration, and Maintenance (OAM) channel to the receiver to name just one of many configurations illustrating how a control signal might be communicated between the transmitter and the receiver.

Those skilled in the art will recognize the inventive DP-QAM transmitter *Tx* differs from existing DP-QAM transmitters. For example, existing DP QAM transmitters apply a distinct data stream to each modulator (i.e., four distinct data streams, one each to one modulator) and are not capable of operating using a modulation order lower than QPSK, as compared to the inventive transmitters *Tx* that uses only two (or one) distinct data streams and can operate using a modulation order lower than QPSK.

The inventors note that such an inventive transmitter *Tx* and corresponding receiver may be part of a flexible modulation system for PONs where, for example, an inventive transmitter within an OLT may inform an inventive receiver within an ONU of a PON to select one or more different modulation/demodulation schemes, one of which may be BPSK as described herein. For example, for a PON system, an inventive OLT that incorporates an inventive transmitter *Tx* may assign a demodulation scheme (process) to an ONU based on the observed channel quality (e.g., the estimated BER) between the OLT and ONU. The OLT may send the demodulation scheme or format to the ONU using for instance PLOAM messages or using a burst profile in a bandwidth map.

However, the inventors note that ONUs may also comprise transmitters and OLTs may also comprise receivers. Accordingly, an exemplary, inventive DP-QAM optical transmitter may be included in (or may be made a part of) an OLT or may be included in (or may be made a part of) an ONU of a PON. Having said that, it should be understood that in an exemplary embodiment when an inventive, DP-QAM is a part of an ONU of a PON, nonetheless the OLT controls the modulation control signal. Conversely, when an exemplary, inventive DP-QAM optical transmitter is a part of an OLT, it is the OLT that controls the modulation control signal.

Accordingly, an inventive receiver within an OLT may inform an inventive transmitter within an ONU to select one or more different modulation/demodulation schemes, one of which may be BPSK as described herein. For example, for a PON system, an inventive OLT that incorporates an inventive receiver as described herein may assign a demodulation scheme (process) to an ONU based on the observed channel quality (e.g., the estimated BER) between the ONU and OLT. The OLT may send the demodulation scheme or format to the ONU using for instance PLOAM messages or using a burst profile in a bandwidth map.

So far we have discussed exemplary transmitters. In an embodiment the inventors also provide complimentary, inventive receivers.

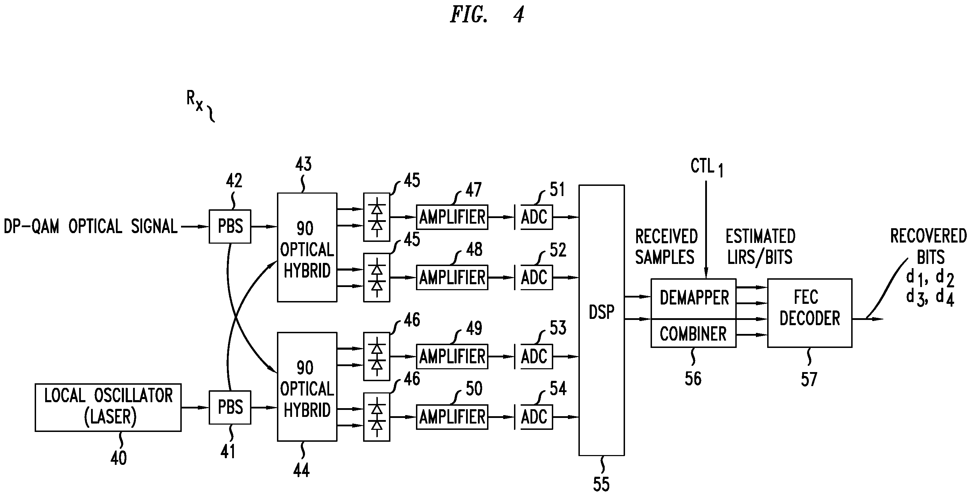

Referring now to Figure 4 there is depicted an exemplary, inventive DP coherent receiver Rx that may be part of an exemplary, inventive ONU (or OLT) of a PON.

Overall, inventive coherent receivers Rx may be configured to recover the optical amplitude, frequency and phase from one of the example transmitter configurations described above. While each of the receivers comprises an arrangement as shown in Figure 4, the specific operations performed within demapping and combining element 56 are based upon the type of modulation used to create the transmitted data stream. That is, the receiver Rx can be configured to recover a DP-BPSK encoded signal (encoded using a transmitter as shown in FIG. 2A), or a QPSK signal (encoded using a transmitter as shown in FIG. 2B), or a BPSK signal (encoded using a transmitter as shown in FIG. 2C). In each case, the received control signal *ctrl₁,* as applied to element 56, is used to properly process the received inputs to provide either log-likelihood ratios ("llrs") or estimated bit values, as a function of the specific type of demapping employed (i.e., "soft" demapping providing "llrs" versus "hard" demapping which provides estimated bit values).

In more detail, the inventive coherent receiver Rx may comprise an optical local oscillator 40, polarization beam splitters 41, 42, a pair of 90 degree optical hybrid elements 43, 44, balanced receiving circuitry 45, 46 configured to separate polarizations and amplitude and phase information from the coherently detected signal achieved by converting the separated optical signals into electrical signals representing reference in-phase and quadrature components, amplifiers 47 to 50, analog-to-digital converters 51 to 54, digital signal processor (DSP) 55 configured to, among other things, adjust polarization and phase rotations (and imbalances) and output estimations of symbols within a received signal that has been modulated with a low-order modulation scheme, the demapping and combining element 56 mentioned previously and forward-error correction (FEC) decoding element 57.

However, again for the sake of clarity and brevity, only those elements related to the inventive methods will be described herein, the remaining elements having functions and features known to those skilled in the art where one skilled in the art recognizes that some of the components in the LO path are configured to perform similar functions as some of the components in the received signal path.

In one embodiment a coherent DP-QAM optical receiver *Rₓ* may comprise a demapping and combiner element 56 configured to receive a modulation control signal *ctl₁.* and two or more samples. Further, the element may comprise one or more combiners, and one or more demappers. In an embodiment, the element 56 is further configured to determine one or more bit indications based on the modulation control signal *ctl₁.*

It should be understood that the exemplary, inventive coherent optical receivers *Rₓ* described herein may be part of an ONU, or OLT. Further, in embodiments the OLT of a PON may control the modulation control signal.

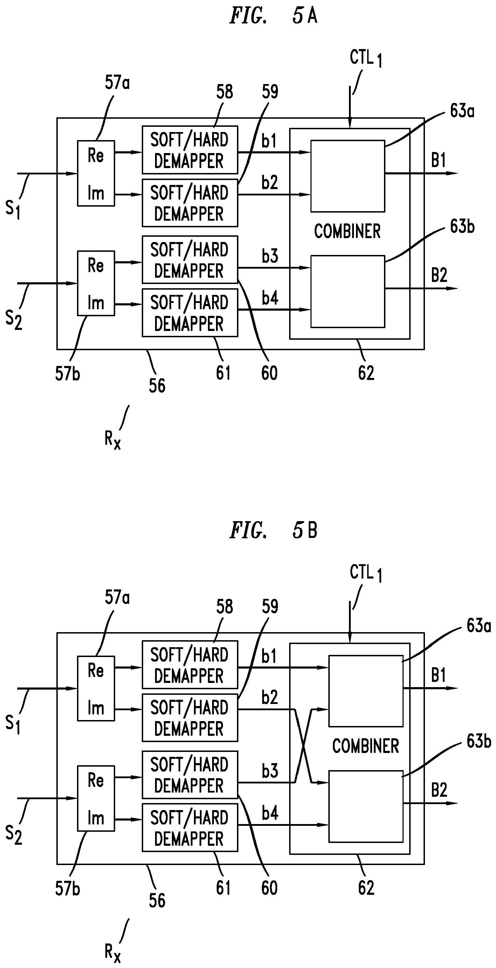

Referring now to Figures 5A to 5C there are illustrated embodiments of a demapping and combining element 56. As shown the element 56 may comprise one or more demappers 58 to 61 configured to receive two or more samples from a respective splitter or splitters 57a, 57b and determine one or more respective intermediate bit indications *b₁, b₂, b₃* and/or *b₄.* Thereafter, the one or more combiners (either combiners 63a, 63b or 62b) are configured to receive the one or more respective intermediate bit indications *b₁, b₂, b₃* and/or *b₄* and the modulation control signal *ctl₁* and combine the one or more respective intermediate bit indications *b₁, b₂, b₃* and/or *b₄* based on the modulation control signal *ctl₁* to determine one or more bit indications *B₁* and/or *B₂*.

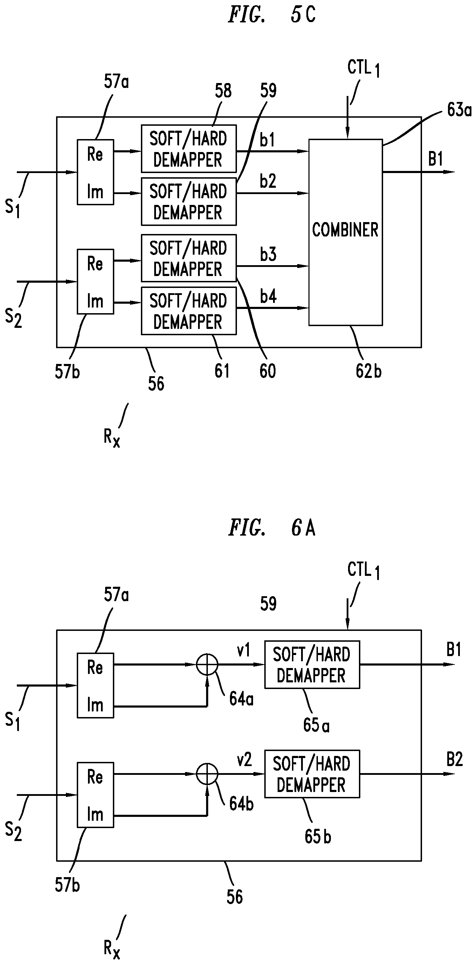

Referring now to Figures 6A to 6C there are illustrated additional embodiments of a demapping and combining element 56. As shown the element 56 may comprise one or more combiners (64a, 64b or 64c,64d or 67a,67b and 67c) configured to receive two or more samples from one or both splitters 57a, 57b and to combine the two or more samples to determine one or more combined values *v₁, v₂,* based on the modulation control signal. Further, the element 56 may comprise one or more demappers (65a,65b or 66a,66b or 68) configured to receive the one or more combined values *v₁, v₂* and determine one or more bit indications *B₁* and/or *B₂* based on the modulation control signal *ctl₁.*

Backtracking somewhat, the demapping and combining element 56 may be configured to determine one or more bit indications and may comprise one or more demappers 58 to 61 (see Figures 5A to 5C) for determining a plurality of intermediate symbolic bits (hard demapping) or intermediate log-likelihood ratios (soft demapping) *b₁, b₂, b₃* and/or *b₄* from received signals that comprise samples of in-phase and quadrature components of a first polarization and a second polarization. For the sake of clarity, the phrase "intermediate bit indication" or "intermediate bit indicator" may be used to describe both a log-likelihood ratio and a bit value output by a demapping component of the element 56.

Continuing, the so determined intermediate bit indications may be output to one or more combiners 63a, 63b or 62b (again, see Figures 5A to 5C) that are part of the element 56.

Upon receiving the plurality of intermediate bit indications and a modulation control signal *ctl₁* the combiner may be configured to select one or more sets of intermediate bit indications from the plurality of intermediate bit indications based on the modulation control signal and combine the one or more sets of intermediate bit indications based on the modulation control signal to form one or more bit indications.

In more detail, the reader is again referred to Figure 5A where there is depicted one embodiment of the demapping and combining element 56. In this embodiment, the element 56 may comprise two splitters 57a, 57b configured to separate respective in-phase and quadrature components for a given polarization, demappers 58 to 61 configured to determine a plurality of intermediate bit indications (bits in hard demapping or log-likelihood ratios in soft demapping) *b₁, b₂, b₃* and/or *b₄* based on the value of samples of the in-phase and quadrature components received from splitters 57a,57b and combiners 63a, 63b (which alternatively may comprise one combiner 62a).

Thus, for each polarization, an in-phase intermediate bit indication and a quadrature intermediate bit indication may be generated by demappers 58 to 61. In an embodiment, the respective in-phase and quadrature intermediate bit indications *b₁, b₂* of a first polarization from demapper elements 58,59 may be provided as inputs to combiner 63a and the respective in-phase and quadrature intermediate bit indications *b₃,b₄* of a second polarization from demapper elements 60,61 may be provided to combiner 63b.

In a further specific embodiment, a first combiner 63a may be configured to select first and second intermediate bit indications *b₁, b₂* from the plurality of intermediate bit indications *b₁, b₂, b₃* and/or *b₄* that are associated with a same, first polarization and combine the selected intermediate first and second bit indications *b₁, b₂* based on the modulation control signal *ctl₁* to form bit indication *B₁*

Further, a second combiner **63b** may be configured to select third and fourth intermediate bit indications *b₃, b₄* from the plurality of intermediate bit indications *b₁*, *b₂, b₃* and/or *b₄* associated with a same, second polarization and combine the selected intermediate third and fourth bit indications *b₃ ,b₄* based on the modulation control signal *ctl₁* to form bit indication *B₂*.

In more detail, when soft demapping is utilized then the log-likelihood ratios may be combined (added or subtracted) by a combiner In comparison, when hard-demapping is utilized a combiner may be configured to operate as follows:
bit values 0,0 are combined to form a "0"
bit values 1,1 are combined to form a "1"
bit values 0,1 or bit values 1,0 are combined in an erasure, which will be corrected by the FEC decoder 57.

In the embodiment illustrated by Figure 5A the inventive configuration and steps that result in combined bit indications (bits or log-likelihood ratios) may represent a DP-BPSK demodulated bit stream.

Alternatively, Figure 5B depicts another embodiment of the demapping and combining element 56. As shown, a first combiner 63a may be configured to select first and third intermediate bit indications *b₁, b₃* from a plurality of intermediate bit indications *b₁, b₂, b₃* and *b₄* based on the modulation control signal *ctl₁.* In embodiments, the respective first intermediate bit indication *b₁* may be associated with a first polarization and the third intermediate bit indication *b₃* may be associated with a second polarization. Thereafter, the first combiner may be further configured to combine the selected first and third intermediate bit indications *b₁, b₃* based on the modulation control signal *ctl₁* to form bit indication *B₁*

In addition, a second combiner 63b may be configured to select second and fourth intermediate bit indications *b₂, b₄* from the plurality of intermediate bit indications *b₁, b₂, b₃* and *b₄* based on the modulation control signal *ctl₁.* In embodiments, the respective second intermediate bit indication *b₂* may be associated with the first polarization and the fourth intermediate bit indication *b₄* may be associated with the second polarization. Thereafter, the second combiner 63b may be configured to combine the selected second and fourth intermediate bit indications *b₂, b₄* based on the modulation control signal *ctl₁* to form bit indication *B₂*.

In an embodiment, the inventive configuration and steps result in combined bit indications (bits or log-likelihood ratios) representing a QPSK demodulated bit stream.

Figure 5C depicts yet another embodiment of the demapping and combining element 56. As shown, the element 56 may comprise combiner 62b which may be configured to receive a plurality of intermediate bit indications *b₁, b₂, b₃* and *b₄* and a modulation control signal *ctl₁,* select first, second, third and fourth intermediate bit indications *b₁, b₂, b₃* and *b₄* from the plurality of intermediate bit indications based on the modulation control signal *ctl₁* wherein the first and second intermediate bit indications *b₁, b₂* may be associated with a first polarization and the third and fourth intermediate bit indications *b₃* and *b₄* may be associated with a second polarization. Thereafter the combiner 62b is further configured to combine the first, second, third and fourth intermediate bit indications *b₁, b₂, b₃* and *b₄* based on the modulation control signal *ctl₁* to form bit indication *B₁*.

In an embodiment the inventive configuration and steps result in combined bit indications (bits or log-likelihood ratios) representing a BPSK demodulated bit stream.

The configuration of demapping and combining elements illustrated in Figures 5A to 5C may be further modified as shown in Figures 6A to 6C.

As shown in Figure 6A, inventive demapping and combining element 56 may comprise two in-phase (real) and quadrature (imaginary) splitters 57a, 57b, combiners 64a, 64b (that may function as adders or subtractors depending on how a transmitted signal was generated) and demappers 65a,65b. In this embodiment upon receipt of the modulation control signal *ctl₁* the element 56 is configured to select two demappers 65a, 65b rather than utilize four demappers as previously used in Figure 5A.

For the sake of clarity, we refer to each of the demappers 65a, 65b as "first" and "second" 60 demappers, and each of the splitters and combiners as "first" and "second" splitters 57a,57b and "first" and "second" combiners 64a, 64b.

In an embodiment, the first splitter 57a may be configured to separate in-phase and quadrature components of a first signal *s₁* having a first polarization orientation and generate a first sample (e.g., digital signal) associated with the in-phase component of the first polarization orientation and generate a second sample associated with the quadrature component of the first polarization orientation. However, instead of outputting the generated samples to a demapper the samples are output to first combiner 64a.

Upon receiving the first sample associated with an in-phase component of the first polarization orientation and the second sample associated with a quadrature component of the first polarization orientation the combiner 64a is configured to combine (add or subtract) the first and second samples and generate and output a first combined value *v₁* associated with the first polarization to the first demapper 65a.

The first demapper 65a may be configured to determine a "first" bit indication *B₁* based on the first combined value *v₁* associated with the first polarization orientation and output the first bit indication to the decoding element 57.

In addition, and at substantially the same time, the second splitter 57b may be configured to separate in-phase and quadrature components of a second signal *s₂* having a second polarization orientation and generate a first sample (e.g., digital signal) associated with the in-phase component of the second polarization and generate a second sample associated with the quadrature component of the second polarization. Thereafter, instead of outputting the generated samples to a demapper as in Figure 5A the samples are output to the second combiner 64b.

Upon receiving the first sample associated with the in-phase component of the second polarization and the second sample associated with a quadrature component of the second polarization orientation the combiner 63b is configured to combine (e.g., add or subtract) the first and second samples and generate and output a second combined value *v₂* associated with the second polarization to the second demapper 65b.

The second demapper 65b may be configured to determine second bit indication(s) (e.g., *B₂*) based on the second combined value *v₂* associated with the second polarized orientation and output the second bit indication to the decoding element 57.

In effect the bit indications generated by the embodiment depicted in Figure 6A results in the same bit indications as generated by the embodiment in Figure 5A.

In an embodiment the bit indications (e.g., symbolic bits or log-likelihood ratios) may represent a DP-BPSK demodulated bit stream.

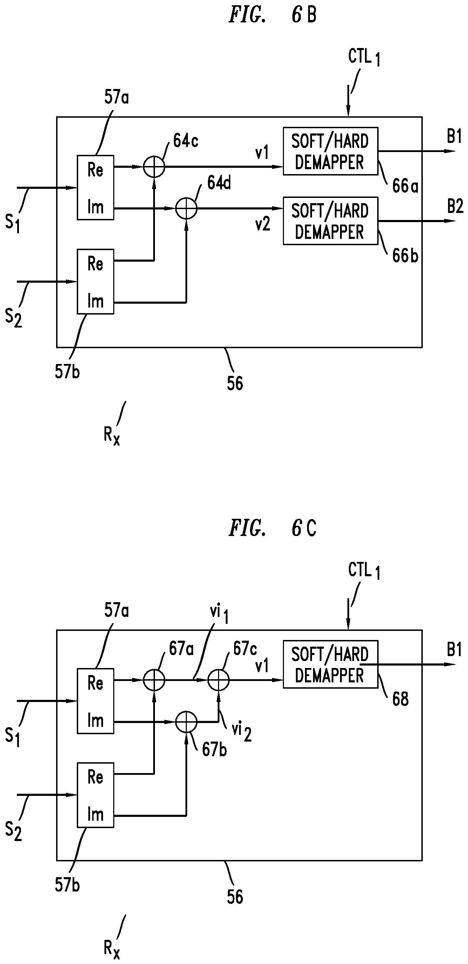

Another embodiment of the demapping and combining element 56 is depicted in Figure 6B. In this embodiment, upon receipt of the modulation control signal *ctl₁* the element 56 may be configured to select two demappers 66a, 66b rather than utilize four demappers as previously used in Figure 5B. In addition, the element 56 may be configured to select a combiners 634c,64d.

For the sake of clarity, we refer to each of the demappers 66a,66b as "first" 58 and "second" 59 demappers and the combiners 64c,64d as "first" and "second" combiners 64c,64d.

In an embodiment, the first splitter 57a may be configured to separate in-phase and quadrature components of a first signal *s₁* having a first polarization orientation and generate a first sample (e.g., digital signal) associated with the in-phase component of the first polarization and generate a second sample associated with the quadrature component of the first polarization.

In addition, the second splitter 57b may be configured to separate in-phase and quadrature components of a second signal *s₂* having a second polarization orientation and generate a first sample (e.g., digital signal) associated with the in-phase component of the second polarization and generate a second sample associated with the quadrature component of the second polarization.

However, instead of outputting the respective samples to a demapper the separated components are output to a combiners 64c,64d.

In more detail, the first combiner 64c may be configured to receive a first sample associated with a first polarization and a third sample associated with a second polarization and then generate a first combined value *v₁*, from such samples. At substantially the same time, the second combiner 64d may be configured to receive a second sample associated with the first polarization and a fourth sample associated with a second polarization and generate a second combined value *v₂* from such samples. Upon generating the first combined value *v₁* the combiner 64c may be configured to output the first combined value *v₁* to the first demapper 66a. Similarly, upon generating the second combined value *v₂* the combiner 64d may be configured to output the second combined value *v₂* to the second demapper 66b.

The first demapper 66a may be configured to determine a first bit indication *B₁* based on the first combined value *v₁*, for the first polarized orientation and output the first bit indication *B₁* to the decoding element 57.

At substantially the same time, the second demapper 66b may be configured to determine a second bit indication *B₂* based on the second combined value *v₂,* for the second polarized orientation and output the second bit indication *B₂* to the decoding element 57.

In effect the bit indications generated by the embodiment depicted in Figure 6B results in the same bit indications as generated by the embodiment in Figure 5B.

Yet another embodiment of demapping and combining element 56 is depicted in Figure 6C. In this embodiment, upon receipt of the modulation control signal *ctl₁* the element 56 may be configured to select only a single demapper 68. In addition, the element 56 may be configured to select one or more combiners 67a, 67b and 67c.

In an embodiment, the first splitter 57a may be configured to separate in-phase and quadrature components of a first signal *s₁* having a first polarization orientation and generate a first sample (e.g., digital signal) associated with the in-phase component of the first polarization and generate a second sample associated with the quadrature component of the first polarization. In addition, the second splitter 57b may be configured to separate in-phase and quadrature components of a second signal *s₂* having a second polarization orientation and generate a first sample (e.g., digital signal) associated with the in-phase component of the second polarization and generate a second sample associated with the quadrature component of the second polarization.

However, instead of outputting the samples to a respective demapper the separated components are output to combiners 67a,67b and 67c. For ease of convenience, we refer to the combiners as "first" combiner 67a, "second" combiner 67b and "third" combiner 67c.

In an embodiment, the first combiner 67a may be configured to receive the first samples associated with the in-phase component of both first and second polarizations and combine the first samples to form a first intermediate value *vi₁.* The second combiner 67b may be configured to receive second samples associated with the quadrature component of both first and second polarizations and combine the second samples to form a second intermediate value *vi₂.*

In an embodiment, the third combiner 67c may be configured to receive the first and second intermediate values *vi₁, vi₂* and combine both intermediate values to form a combined value *v₁*. The third combiner 67c may be configured to output the combined value *v₁* to demapper 68.

Upon receiving the combined value *v₁* the demapper 68 may be configured to determine a bit indication *B₁* based on the combined value *v₁* and output the bit indication to the decoding element 57.

In effect the bit indication generated by the embodiment depicted in Figure 6C may result in the same bit indication as generated by the embodiment in Figure 5C.

In the discussion above and in Figure 4 the DSP 53 is illustrated and discussed as a separate element from the demapping and combining element 56. Hower, this is merely exemplary. In an alternative embodiment, the DSP 53 may comprise the splitting, demapping and combining elements, functions and features described herein.

In embodiments, the DSP 53 may comprise at least one (or more) electronic processors, and at least one (or more) electronic memories that includes stored computer program code, where the at least one memory and computer program code may be configured, with the at least one processor, to cause the DSP 53 to complete one or more demapping and combining functions and features described, including but not limited to the functions and features of the splitters, combiners and hard and soft demappers depicted in Figures 5A to 6C as well as error correction and equalization functions and features and other processes that enhance the quality of the received digital bit streams.

Benefits, advantages, and solutions to problems have been described above with regard to specific embodiments of the present disclosure. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A dual-polarized (DP) quadrature amplitude modulation (QAM) optical transmitter comprising:
a control unit configured to,
receive a plurality of different data streams and a modulation control signal,
select one or two of the plurality of received data streams to be output based on the modulation control signal,
select at least two optical modulators to receive a same data stream from among the one or two selected data streams,
output the same data stream to the selected optical modulators; and
wherein the at least two modulators are configured to generate respective optical signals modulated with the same data stream in accordance with the modulation control signal.

2. The DP-QAM transmitter as in claim 1 wherein:
the control unit is further configured to,
select a first and second data stream from the plurality of received data streams to be output based on the modulation control signal,
select a first set of optical modulators to receive a same data stream comprising the first selected data stream based on the modulation control signal,
select a second set of optical modulators to receive a same data stream comprising the second selected data stream based on the modulation control signal,
output the same first data stream to the first set of optical modulators, and output the same second data stream to the second set of optical modulators;
the first set of optical modulators comprising a first in-phase modulator and a first quadrature modulator associated with a first polarization for generating respective optical signals modulated with the same first data stream; and
the second set of optical modulators comprising a second in-phase modulator and a second quadrature modulator associated with a second polarization for generating respective optical signals modulated with the same second data stream.

3. The DP-QAM transmitter as in claim 1 wherein:
the control unit is further configured to,
select a first and second data stream from the plurality of received data streams to be output based on the modulation control signal,
select a first set of optical modulators to receive a same data stream comprising the first selected data stream based on the modulation control signal,
select a second set of optical modulators to receive a same data stream comprising the second selected data stream based on the modulation control signal,
output the same first data stream to the first set of optical modulators, and output the same second data stream to the second set of optical modulators;
the first set of optical modulators comprising a first modulator associated with a first polarization and a second modulator associated with a second polarization for generating respective optical signals modulated with the same first data stream; and
the second set of optical modulators comprising a third modulator associated with the first polarization and a fourth modulator associated with the second polarization for generating respective optical signals modulated with the same second data stream.

4. The DP-QAM transmitter as in claim 1 wherein:
the control unit is further configured to,
select a first data stream from the plurality of received data streams to be output based on the modulation control signal,
select a first set and second set of optical modulators to receive a same data stream comprising the first selected data stream based on the modulation control signal,
output the same first data stream to the first and second set of optical modulators;
the first set of optical modulators comprising a first in-phase modulator and a first quadrature modulator associated with a first polarization for generating respective optical signals modulated with the same first data stream; and
the second set of optical modulators comprising a second in-phase modulator and a second quadrature modulator associated with a second polarization for generating respective optical signals modulated with the same first data stream.

5. The DP-QAM transmitter as in claim 1 wherein:
the control unit is further configured to,
select a first data stream from the plurality of received data streams to be output based on the modulation control signal,
select at least two optical modulators to receive a same data stream comprising the first data stream,
output the first data stream to the selected optical modulators selected to receive the first data stream; and
wherein the selected optical modulators selected to receive the first data stream comprise at least one in-phase modulator and at least one quadrature modulator associated with the same polarization for generating respective optical signals modulated with the same first data stream.

6. A coherent DP-QAM optical receiver comprising:
a demapping and combiner element configured to receive a modulation control signal and two or more samples, the element comprising,
one or more combiners, and one or more demappers,
wherein the element is further configured to determine one or more bit indications based on the modulation control signal.

7. The coherent DP-QAM optical receiver as in claim 6 wherein,
the one or more demappers are configured to,
receive the two or more samples and determine one or more respective intermediate bit indications and
the one or more combiners are configured to,
receive the one or more respective intermediate bit indications and the modulation control signal and combine the one or more respective intermediate bit indications based on the modulation control signal to determine the one or more bit indications.

8. The coherent DP-QAM optical receiver as in claim 6 wherein,
the one or more combiners are configured to
receive the two or more samples and to combine the two or more samples to determine one or more combined values based on the modulation control signal, and
the one or more demappers are configured to,
receive the one or more combined values and determine the one or more bit indications based on the modulation control signal.

9. The coherent DP-QAM optical receiver as in claim 7, wherein the
one or more combiners are configured to,
receive a plurality of intermediate bit indications and the modulation control signal,
select one or more sets of the intermediate bit indications from the plurality of intermediate bit indications based on the modulation control signal; and
combine the one or more sets of intermediate bit indications based on the modulation control signal to form the one or more bit indications.

10. The coherent DP-QAM optical receiver as in claim 9 wherein:
a first combiner of the one or more combiners is configured to select first and second intermediate bit indications from the plurality of intermediate bit indications associated with the same, first polarization and combine the selected first and second intermediate bit indications based on the modulation control signal; and
a second combiner of the one or more combiners is configured to select third and fourth intermediate bit indications from the plurality of intermediate bit indications associated with the same, second polarization and combine the selected third and fourth intermediate bit indications based on the modulation control signal.

11. The coherent DP-QAM optical receiver as in claim 9 wherein:
a first combiner of the one or more combiners is configured to select first and third intermediate bit indications from the plurality of intermediate bit indications wherein the first intermediate bit indication is associated with a first polarization and the third intermediate bit indication is associated with a second polarization, and combine the selected first and third bit intermediate bit indications based on the modulation control signal; and
a second combiner of the one or more combiners is configured to select second and fourth intermediate bit indications from the plurality of intermediate bit indications wherein the second intermediate bit indication is associated with the first polarization and the fourth intermediate bit indication is associated with the second polarization and combine the second and fourth intermediate bit indications based on the modulation control signal.

12. The coherent DP-QAM optical receiver as in claim 9 wherein a combiner of the one or more combiners is further configured to:
receive the plurality of intermediate bit indications and a modulation control signal,
select first, second, third and fourth intermediate bit indications from the plurality of intermediate bit indications based on the modulation control signal, wherein the first and second intermediate bit indication are associated with a first polarization, and the third and fourth intermediate bit indication are associated with a second polarization; and
combine the first, second, third and fourth bit indications based on the modulation control signal.

13. The coherent, DP-QAM receiver as in claim 8, wherein
the demapping and combining element is further configured to select a first and second demapper; the coherent DP-QAM receiver comprising:
a first combiner configured to receive a first sample associated with an in-phase component of a first polarization and a second sample associated with a quadrature component of the first polarization and generate a first combined value;
the first demapper configured to determine a first bit indication based on the first combined value associated with the first polarization;
a second combiner configured to receive a first sample associated with an in-phase component of a second polarization and a second sample associated with a quadrature component of the second polarization and generate a second combined value; and
the second demapper configured to determine a second bit indication based on the second combined value associated with the second polarization.

14. The coherent, DP-QAM receiver as in claim 8, wherein
the demapping and combining element is further configured to select a first and a second demapper and to select a first and a second combiner; the coherent DP-QAM receiver comprising:
the first combiner configured to receive a first sample associated with a first polarization and a third sample associated with a second polarization and generate a first combined value,
the second combiner configured to receive a second sample associated with the first polarization and a fourth sample associated with the second polarization and generate a second combined value;
the first demapper configured to determine a first bit indication based on the first combined value; and
the second demapper configured to determine a second bit indication based on the second combined value.

15. The coherent, DP-QAM receiver as in claim 8, wherein
the demapping and combining element is further configured to select a demapper and one or more combiners; the coherent DP-QAM receiver comprising:
a first combiner of the one or more combiners configured to receive first samples associated with in-phase components of first and second polarizations and combine the first samples to form a first intermediate value;
a second combiner of the one or more combiners configured to receive second samples associated with the quadrature component of the first and second polarizations and combine the second samples to form a second intermediate value;
a third combiner of the one or more combiners configured to receive the first and second intermediate values and combine the intermediate values to form a combined value; and
the demapper configured to receive the combined value and to determine a bit indication based on the combined value.
